# EUROPÄISCHE PATENTSCHRIFT

(11) **EP 2 676 344 B1**
(45) Veröffentlichungstag und Bekanntmachung des Hinweises auf die Patenterteilung: **17.08.2016**
(21) Anmeldenummer: 12704390.9
(22) Anmeldetag: 07.02.2012
(51) Int. Cl.: H02B 13/045, H02G 3/04, H02G 5/00

(54) **LÄNGENVERÄNDERBARE KAPSELUNGSGEHÄUSEANORDNUNG FÜR EINE GEKAPSELTE ELEKTROENERGIEÜBERTRAGUNGSEINRICHTUNG**
EXTENDABLE-LENGTH ENCAPSULATING HOUSING ARRANGEMENT FOR AN ENCAPSULATED ELECTRICAL ENERGY TRANSMISSION DEVICE
ENSEMBLE BOÎTIER DE BLINDAGE DE LONGUEUR VARIABLE POUR UNE INSTALLATION DE TRANSMISSION D'ÉNERGIE ÉLECTRIQUE BLINDÉE

(30) Priorität: 14.02.2011 DE 102011004032
(43) Veröffentlichungstag der Anmeldung: 25.12.2013
(73) Patentinhaber: Siemens Aktiengesellschaft, 80333 München (DE)
(72) Erfinder: RAUTENBERG, Steffen, 12161 Berlin (DE); SCHMIDTKE, Markus, 16540 Hohen Neuendorf (DE)
(86) Internationale Anmeldenummer: PCT/EP2012/052017
(87) Internationale Veröffentlichungsnummer: WO 2012/110356

(56) Entgegenhaltungen:
- EP-A1- 2 003 756
- DE-A1- 2 603 040
- DE-A1-102008 027 644
- FR-A1- 2 217 840
- FR-A5- 2 048 513

## Beschreibung

Die Erfindung bezieht sich auf eine längenveränderbare Kapselungsgehäuseanordnung für eine gekapselte Elektroenergieübertragungseinrichtung mit einem ersten Kapselungsgehäuse mit einer Gleitfläche sowie einem zweiten Kapselungsgehäuse, welches gleitend an der Gleitfläche des ersten Kapselungsgehäuses abgestützt ist.

Eine Kapselungsgehäuseanordnung ist beispielsweise aus der Offenlegungsschrift DE 26 03 040 A1 bekannt. Dort ist eine Kapselungsgehäuseanordnung beschrieben, welcher ein erstes und ein zweites Kapselungsgehäuse aufweist. Die bekannten Kapselungsgehäuse sind jeweils rohrartig ausgestaltet und ragen teleskopartig ineinander. Um eine Relativbewegung zwischen den Kapselungsgehäusen zu befördern ist vorgesehen, Kunststoffführungsringe als Gleitkörper einzusetzen. Alternativ wird vorgeschlagen, eines der Kapselungsgehäuse aus einem elastischen Material zu formen, so dass Längenänderungen durch Verformungen des elastischen Materials ausgeglichen werden. Somit ist zwar eine Gleitführung vermieden, jedoch ist die Langzeitstabilität des verformbaren Materials fraglich.

Die Nutzung von Kunststoffführungsringen führt zu einer Reduzierung von Reibungskräften und zu einer leichtgängigen Relativbewegung der beiden Kapselungsgehäuse zueinander. Problematisch ist jedoch die Freiluftfestigkeit. Insbesondere Feuchtigkeit kann sich ansammeln und gemeinsam mit Stäuben auf die Kunststoffführungsringe einwirken. Die Kunststoffführungsringe können so frühzeitig verschleißen.

Aus der Offenlegungsschrift DE 10 2008 027 644 A1 ist eine längenveränderbare Kapselungsgehäuseanordnung bekannt, welche relativ zueinander bewegbare Kapselungsgehäuse aufweist, die über eine Gleitfläche aneinander abgestützt sind. Zur Führung der Kapselungsgehäuse ist bei der bekannten Konstruktion vorgesehen, diskrete Gleitlager zu verwenden, welche in Ausnehmungen von Muffenschultern eingelegt sind. Eine derartige Ausgestaltung ist zum einen hinsichtlich ihrer Herstellung kostenintensiv. Insbesondere stellen die massiven Gleitlager an sich vergleichsweise kostspielige Elemente dar.

Aus der Offenlegungsschrift FR 2 217 840 A1 geht eine Verbindung für einen rohrförmigen elektrischen Stromleiter hervor. Die Verbindung ist längenveränderlich ausgestaltet, wobei ein Ende einer Hülse mit einer Beschichtung aus einem Material mit niedrigem Reibungskoeffizienten versehen ist. Beschichtungen stellen bei Fertigungsprozessen kostenintensive Schritte dar, die ein nicht unerhebliches Volumen an Material zum Beschichten benötigen.

Somit ergibt sich als Aufgabe der Erfindung, eine längenveränderbare Kapselungsanordnung anzugeben, welche bei reduzierten Materialkosten kostengünstig zu fertigen ist.

Erfindungsgemäß wird die Aufgabe bei einer längenveränderbaren Kapselungsanordnung der eingangs genannten Art dadurch gelöst, dass das erste Kapselungsgehäuse einen Tragkörper aufweist, auf welchen zur Ausbildung der Gleitfläche eine Beschichtung aufgebracht ist, wobei die Beschichtung eine Lackschicht ist, in welche reibungsreduzierende Partikel, insbesondere Kunststoffpartikel, eingelagert sind.

Ein Tragkörper eines Kapselungsgehäuses verleiht dem Kapselungsgehäuse eine winkelstarre Struktur. Ein Tragkörper kann beispielsweise ein metallischer Körper sein. Der Tragkörper kann beispielsweise ein Gusskörper aus einem Nichteisenmetall wie Aluminium, Messing sowie entsprechenden Legierungen sein. Der Tragkörper kann eine fluiddichte Wandung für ein Kapselungsgehäuse ausbilden. In einem einfachen Fall kann ein Kapselungsgehäuse einen einstückigen Tragkörper aufweisen.

Vorteilhaft ist, die Kapselungsgehäuse als Gussteile aus einem Nichteisenmetall zu fertigen. Als Gleitfläche können beispielsweise Mantelflächen eines rohrförmigen Abschnittes des ersten Kapselungsgehäuses ausgebildet werden. Dabei können sowohl an Innenmantelflächen als auch an Außenmantelflächen des ersten Kapselungsgehäuses eine Gleitfläche angeordnet sein. Entsprechend umgreift das zweite Kapselungsgehäuse eine Außenmantelfläche des ersten Kapselungsgehäuses oder eine Innenmantelfläche des ersten Kapselungsgehäuses umgreift das zweite Kapselungsgehäuse. Rohrabschnitte des ersten bzw. zweiten Kapselungsgehäuses überdecken einander so, dass zwischen ihnen ein in sich geschlossen umlaufender Fügespalt gebildet ist. Die beiden Kapselungsgehäuse sind zueinander axial verschiebbar. Das zweite Kapselungsgehäuse liegt gleitend an der Gleitfläche des ersten Kapselungsgehäuses an. Dazu kann das zweite Kapselungsgehäuse mit Gleitelementen ausgestattet sein.

Durch eine Beschichtung eines Tragkörpers des ersten Kapselungsgehäuses ist eine Möglichkeit gegeben die Oberflächengüte der Gleitfläche zu beeinflussen. Je nach Einsatzbedingungen kann die Güte der Oberfläche variieren. Durch eine Beschichtung kann die Gefahr eines Auftretens des Haftgleiteffektes reduziert werden. Der Haftgleiteffekt ist insbesondere zu fürchten, wenn eine Relativbewegung zwischen den beiden Kapselungsgehäusen relativ selten auftritt.

Die Beschichtung kann auch als Korrosionsschutzschicht wirken, so dass die Güte der Gleitfläche durch Korrosion nicht nachteilig verändert wird. Die Beschichtung kann zumindest abschnittsweise einer Bewitterung ausgesetzt sein. Vorteilhaft sollte die Beschichtung fluiddicht auf dem Tragkörper haften. Damit wird ein Lösen der Beschichtung von dem Tragkörper erschwert. Insbesondere bei einer Verwendung der Kapselungsgehäuseanordnung an einer druckgasisolierten Elektroenergieübertragungseinrichtung kann die Beschichtung als Teil einer druckfesten fluiddichten Kapselung verwendet werden. Beispielsweise kann ein Dichtelement fluiddicht verschieblich auf der Gleitfläche dichtend anliegen. Die Beschichtung kann beispielsweise als in sich geschlossener Ring ausgeführt sein. Der Ring kann innenmantelseitig oder außenmantelseitig am ersten Kapselungsgehäuse bandartig umlaufend angeordnet sein.

Vorteilhaft kann vorgesehen sein, dass die Beschichtung in fluidem Zustand auf den Tragkörper aufgetragen wird und anschließend auf dem Tragkörper aushärtet.

Eine vorteilhafte Ausgestaltung kann vorsehen, dass die Beschichtung eine metallische Beschichtung ist.

Eine metallische Beschichtung weist gegenüber Reibkräften eine gute Widerstandsfähigkeit auf, so dass ein vorzeitiger Verschleiß nicht zu erwarten ist. Weiterhin stellt eine metallische Beschichtung eine fluiddichte Barriere dar, so dass eine derartige Beschichtung günstig an druckgasisolierten Schaltanlagen einzusetzen ist. Beispielsweise können korrosionsarme Edelstähle Verwendung finden, um eine Beschichtung an dem ersten Kapselungsgehäuse ausbilden zu können. Edelstähle können beispielsweise unmittelbar auf Aluminiumgusskörper aufgebracht werden. Dort schützen die Stähle abgedeckte Bereiche sowohl mechanisch als auch vor unmittelbaren chemischen Einwirkungen.

Eine metallische Beschichtung kann beispielsweise aufgespritzt werden. Eine Spritzbeschichtung ermöglicht einen Auftrag einer mehrere 100 µm dicken Beschichtung. Diese Beschichtung ist mit der Oberfläche des Tragkörpers fluiddicht verbunden. Durch einen direkten Verbund kann auf Hilfsstoffe verzichtet werden. Weiter kann in einfacher Weise das elektrische Potential des Tragkörpers auch auf die Beschichtung übertragen werden. Vor einem Auftragen kann ein Metall durch thermische Einwirkung in einen fluiden Zustand versetzt werden und auf den Tragkörper des Kapselungsgehäuses aufgespritzt werden. Dazu kann ein thermisches Spritzverfahren wie beispielsweise ein Plasmaspritzverfahren Verwendung finden. Es kann jedoch auch ein Kaltgasspritzverfahren verwendet werden. In den Spritzstrahl können auch Zuschlagstoffe eingemischt werden, so dass die erzeugte Beschichtung aus einer Mischung verschiedener Stoffe bestehen kann.

Eine Beschichtung mittels eines Lackes ist kostengünstig. Ein Lackieren ist innerhalb kurzer Arbeitszyklen durchführbar. Je nach zu erwartenden Umwelteinflüssen kann eine ausreichende Versiegelung an dem ersten Kapselungsgehäuse erzielt werden. Als Lacke eignen sich beispielsweise Mehrkomponentenlacke, die einfach zu verarbeiten sind.

In die Beschichtung sind reibungsreduzierende Partikel, insbesondere Kunststoffpartikel, eingelagert.

Die Partikel weisen gegenüber dem Stoff, in welchem sie eingelagert sind, eine reduzierte Gleitreibung auf. Die Partikel bilden Teile der Oberfläche der Gleitschicht. Ein Einlagern von Kunststoffpartikeln ermöglicht ein reibungsarmes Gleiten des zweiten Kapselungsgehäuses auf der Gleitschicht. Gegenüber diskreten Gleitelementen können die Kunststoffpartikel großflächig in die Gleitschicht eingebunden sein. Die Kunststoffpartikel sind von dem Lack bzw. der metallischen Beschichtung umgeben und in diese eingebettet. Damit sind die Kunststoffpartikel vor mechanischen Überlastungen geschützt. Insbesondere kann ein günstiger Übergang von Haftreibung auf Gleitreibung während einer Relativbewegung unterstützt werden. Als geeignete Kunststoffe haben sich organische Kunststoffe wie etwa PTFE (Polytetrafluorethylen) erwiesen. Der Kunststoff kann gemeinsam mit der Beschichtung für die Gleitschicht aufgebracht werden. Die Kunststoffpartikel können beispielsweise bereits im unausgehärteten Lack vorliegen und gemeinsam mit diesem auf das erste Kapselungsgehäuse aufgebracht werden. Derartige Lacke werden auch als Gleitlacke bezeichnet.

Vorteilhafterweise kann weiter vorgesehen sein, dass die Beschichtung nach einem Auftrag auf den Tragkörper spanend bearbeitet wird.

Eine spanende Bearbeitung wie beispielsweise Drehen, Fräsen, Schleifen etc. ermöglicht es, die Güte der Gleitfläche zusätzlich zu beeinflussen. Durch eine spanende Bearbeitung kann die Passform der Gleitfläche bezüglich des zweiten Kapselungsgehäuses angepasst werden. Weiterhin ist es möglich, eingelagerte Partikel freizulegen, so dass eine großflächige Auflagefläche an den Partikeln zur Reduzierung der Gleitreibung gegeben ist.

Weiterhin kann vorteilhaft vorgesehen sein, dass die Beschichtung Teil einer fluiddichten Gleitdichtung zwischen dem ersten und dem zweiten Kapselungsgehäuse ist.

Die Kapselungsgehäuse können in ihrem Innern ein Fluid, insbesondere ein Isoliergas umschließen. Um ein unerwünschtes Entweichen des Gases zu verhindern, ist zwischen den Kapselungsgehäusen eine fluiddichte Dichtung vorzusehen. Die Dichtung ist derart auszuführen, dass einer Längenveränderung der Kapselungsgehäuseanordnung möglichst nicht entgegengewirkt wird. So kann eine Gleitdichtung an der Beschichtung ausgebildet werden, indem ein Dichtelement gegen die Beschichtung gepresst ist, so dass ein fluiddichter Verbund zwischen den beiden Kapselungsgehäusen gegeben ist. Das Dichtelement gleitet über die Beschichtung und umläuft die Achsrichtung, in welcher eine Längenänderung vorgesehen ist. Das Dichtelement kann beispielsweise ortsfest an dem zweiten Kapselungsgehäuse gelagert sein. Beispielsweise kann das Dichtelement in Form eines Ringes in einer Nut des zweiten Kapselungsgehäuses gelagert werden.

Weiterhin kann vorteilhaft vorgesehen sein, dass ein Kontaktelement, insbesondere ein Gleitkontakt die beiden Kapselungsgehäuse miteinander kontaktiert.

Auch bei einer Relativbewegbarkeit der Kapselungsgehäuse zueinander sollte eine dauerhafte elektrische Kontaktierung der beiden Kapselungsgehäuse als Potentialausgleich vorgesehen sein. Das Kontaktelement überbrückt einen zwischen den Kapselungsgehäusen ausgebildeten Fügespalt. Damit weisen die Kapselungsgehäuse jeweils das gleiche elektrische Potential auf. Entladungserscheinungen zwischen den Kapselungsgehäusen sind verhindert. Die Kapselungsgehäuse sollten elektrisch leitfähig ausgeführt sein.

Im Folgenden wird ein Ausführungsbeispiel der Erfindung schematisch in einer Zeichnung gezeigt und nachfolgend näher beschrieben.

Dabei zeigt die
- Figur 1: einen Schnitt durch eine erste Kapselungsgehäuseanordnung und die
- Figur 2: einen Schnitt durch eine zweite Kapselungsgehäuseanordnung.

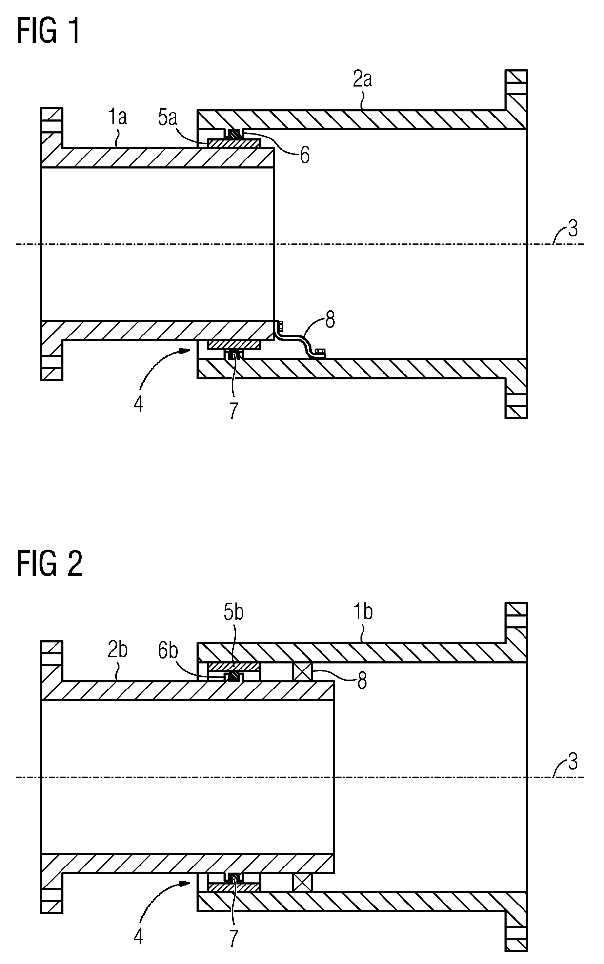

Die in Figur 1 gezeigte erste Kapselungsgehäuseanordnung weist ein erstes Kapselungsgehäuse 1a und ein zweites Kapselungsgehäuse 2a auf. Die Kapselungsgehäuse 1a, 2a sind rohrförmig ausgebildet und koaxial zu einer Hauptachse 3 ausgerichtet. Der Querschnitt des ersten Kapselungsgehäuses 1a ist dabei derart gewählt, dass das erste Kapselungsgehäuse 1a von dem zweiten Kapselungsgehäuse 2a unter Bildung eines Fügespaltes 4 umgriffen werden kann. Die beiden Kapselungsgehäuse 1a, 2a sind längs der Hauptachse 3 relativ zueinander beweglich, so dass die erste Kapselungsgehäuseanordnung in Richtung der Hauptachse 3 längenveränderlich ist.

An den vom Fügespalt 4 abgewandten Enden sind die Kapselungsgehäuse 1a, 2a jeweils mit Ringflanschen ausgestattet. Über die Ringflansche sind die Kapselungsgehäuse 1a, 2a mit weiteren Baugruppen verbindbar. Die voneinander abgewandten Enden können auch fluiddicht verschlossen sein, so dass im Innern des ersten Kapselungsgehäuseanordnung ein Fluid eingeschlossen werden kann. So können an den Ringflanschen beispielsweise Scheibenisolatoren angeordnet sein, welche in Richtung der Hauptachse 3 von einem oder mehrere Phasenleitern durchsetzt sind. Das Innere der ersten Kapselungsgehäuseanordnung kann beispielsweise mit einem druckerhöhten Isoliergas befüllt sein, so dass im Innern der ersten Kapselungsgehäuseanordnung eine elektrische Isolation des Phasenleiters gegenüber den Kapselungsgehäusen 1a, 2a durch das Isoliergas sichergestellt ist.

Um einen fluiddichten Verbund auch im Bereich des Fügespaltes 4 sicherzustellen, weist das erste Kapselungsgehäuse 1a eine Gleitfläche 5a auf. Die Gleitfläche 5a ist durch eine Beschichtung eines Außenmantels des ersten Kapselungsgehäuses 1a gebildet. Die Gleitfläche 5a läuft bandförmig in sich geschlossen um die Hauptachse 3 um. Vorliegend wurde die Beschichtung auf einen Tragkörper aus Aluminiumguss mittels Plasmaspritzens eines Edelstahls aufgetragen. Nach erfolgter Beschichtung wurde durch spanende Bearbeitung eine kreiszylindermantelförmige Gleitfläche 5a geschaffen. Alternativ kann zur Ausbildung der Gleitfläche 5a auch eine Lackierung des ersten Kapselungsgehäuses 1a vorgenommen werden. Unabhängig von der Art der Beschichtung können in die Beschichtung reibungsreduzierte Partikel eingebettet sein. Die eingebetteten Partikel bilden dann Teile der Oberfläche der Gleitfläche 5a.

Im Bereich des Fügespaltes 4 ist das zweite Kapselungsgehäuse 2a mit einer innenmantelseitig vorspringenden Ringschulter 6 ausgestattet. Die Ringschulter 6 trägt ein Dichtelement 7, welches gegen die Gleitfläche 5a gepresst ist. Das Dichtelement 7 bildet eine fluiddichte Barriere zwischen der Gleitfläche 5a des ersten Kapselungsgehäuses 1a und der Ringschulter 6 des zweiten Kapselungsgehäuses 2a aus. Darüber hinaus kann ein Dichtelement 7 auch unter Verzicht einer vorspringenden Ringschulter 6 am zweiten Kapselungsgehäuse 2a beispielsweise in einer Ringnut gelagert sein.

Zur Unterstützung einer Führung der Kapselungsgehäuse 1a, 2a können im Bereich des Fügespaltes 4 zusätzliche Gleitlager angeordnet sein. Beispielsweise kann axial versetzt zu der Ringschulter 6 ein oder mehrere Führungsringe am zweiten Kapselungsgehäuse 2a positioniert sein, welche eine stützende und führende Wirkung entfalten und so das Dichtelement 7 vor mechanischer Überlastung schützen.

Das erste Kapselungsgehäuse 1a und das zweite Kapselungsgehäuse 2a sind über ein flexibles Leiterseil, welches als Kontaktelement 8 wirkt, miteinander verbunden.

In der Figur 2 ist eine zweite Kapselungsgehäuseanordnung dargestellt. Der Aufbau der zweiten Kapselungsgehäuseanordnung entspricht im Wesentlichen dem Aufbau der ersten Kapselungsgehäuseanordnung. Daher wird im Folgenden lediglich auf Unterschiede eingegangen.

Abweichend zur ersten Kapselungsgehäuseanordnung ist ein erstes Kapselungsgehäuse 1b derart dimensioniert, dass dieses ein zweites Kapselungsgehäuse 2b außenmantelseitig umgreift. Die beiden Kapselungsgehäuse 1b, 2b überlappen einander und bilden einen Fügespalt 4. Die beiden Kapselungsgehäuse 1b, 2b sind längs einer Hauptachse 3 relativ zueinander verschiebbar.

In Bereich des Fügespaltes 4 ist innenmantelseitig am ersten Kapselungsgehäuse 1b eine Gleitfläche 5b angeordnet. Entsprechend ist außenmantelseitig im Bereich des Fügespaltes 4 eine Ringschulter 6b am zweiten Kapselungsgehäuse 2b angeordnet. Mittels eines an der Ringschulter 6b gelagerten Dichtelementes 7 erfolgt eine fluiddichte Abdichtung des Fügespaltes 4 zwischen erstem und zweitem Kapselungsgehäuse 1b, 2b. Dazu wird das Dichtungselement 7, welches um die Ringschulter 6b umläuft in radialen Richtungen gegen die Gleitfläche 5b des ersten Kapselungsgehäuses 1b gepresst. Darüber hinaus kann ein Dichtelement auch unter Verzicht auf eine vorspringende Ringschulter 6b am zweiten Kapselungsgehäuse 2b beispielsweise in eine Ringnut eingelegt sein.

Im Fügespalt 4 ist zur elektrischen Kontaktierung der Kapselungsgehäuse 1b, 2b eine Gleitkontaktanordnung in Form einer umlaufenden Wurmfeder als Kontaktelement 8 angeordnet.

## Patentansprüche

1. Längenveränderbare Kapselungsgehäuseanordnung für eine gekapselte Elektroenergieübertragungseinrichtung mit einem ersten Kapselungsgehäuse (1a, 1b) mit einer Gleitfläche (5a, 5b) sowie einem zweiten Kapselungsgehäuse (2a, 2b), welches gleitend an der Gleitfläche (5a, 5b) des ersten Kapselungsgehäuses (1a, 1b) abgestützt ist,
**dadurch gekennzeichnet, dass** das erste Kapselungsgehäuse (1a, 1b) einen Tragkörper aufweist, auf welchen zur Ausbildung der Gleitfläche (5a, 5b) eine Beschichtung aufgebracht ist, wobei die Beschichtung eine Lackschicht ist, in welche reibungsreduzierende Partikel, insbesondere Kunststoffpartikel, eingelagert sind.

2. Längenveränderbare Kapselungsgehäuseanordnung nach Anspruch 1,
**dadurch gekennzeichnet, dass** die Beschichtung eine metallische Beschichtung ist.

3. Längenveränderbare Kapselungsgehäuseanordnung nach einem der Ansprüche 1 oder 2,
**dadurch gekennzeichnet, dass** die Beschichtung nach einem Auftrag auf den Tragkörper spanend bearbeitet wird.

4. Längenveränderbare Kapselungsgehäuseanordnung nach einem der Ansprüche 1 bis 3,
**dadurch gekennzeichnet, dass** die Beschichtung Teil einer fluiddichten Gleitdichtung zwischen dem ersten und dem zweiten Kapselungsgehäuse (1a, 1b, 2a, 2b) ist.

5. Längenveränderbare Kapselungsgehäuseanordnung nach einem der Ansprüche 1 bis 4,
**dadurch gekennzeichnet, dass** ein Kontaktelement (8), insbesondere ein Gleitkontakt die beiden Kapselungsgehäuse miteinander kontaktiert.

## Claims

1. Variable length encapsulation housing arrangement for an encapsulated electrical energy transmission device having a first encapsulation housing (1a, 1b) with a sliding surface (5a, 5b) and a second encapsulation housing (2a, 2b) which is supported in a sliding manner on the sliding surface (5a, 5b) of the first encapsulation housing (1a, 1b),
**characterized in that**
the first encapsulation housing (1a, 1b) has a supporting body on which a coating is applied to form the sliding surface (5a, 5b), wherein the coating is a layer of varnish into which friction-reducing particles, in particular plastic particles, are incorporated.

2. Variable length encapsulation housing arrangement according to Claim 1,
**characterized in that**
the coating is a metallic coating.

3. Variable length encapsulation housing arrangement according to either of Claims 1 and 2,
**characterized in that**
the coating is machined after applying to the supporting body.

4. Variable length encapsulation housing arrangement according to one of Claims 1 to 3,
**characterized in that**
the coating is part of a fluid-tight sliding seal between the first and the second encapsulation housing (1a, 1b, 2a, 2b).

5. The variable length encapsulation housing arrangement according to one of Claims 1 to 4,
**characterized in that**
a contact element (8), in particular a sliding contact, connects the two encapsulation housings to one another.

## Revendications

1. Agencement de boîtier de blindage de longueur variable pour un dispositif de transfert d'énergie électrique blindé, comprenant un premier boîtier (1a, 1b) de blindage ayant une surface (5a, 5b) de glissement, ainsi qu'un deuxième boîtier (2a, 2b) de blindage, qui s'appuie en glissant sur la surface (5a, 5b) de glissement du premier boîtier (1a, 1b) de blindage,
**caractérisé en ce que**
le premier boîtier (1a, 1b) de blindage a un corps support, sur lequel est déposé un revêtement pour former la surface (5a, 5b) de glissement, le revêtement étant une couche de vernis, dans laquelle sont incorporées des particules réduisant le frottement, notamment des particules de matière plastique.

2. Agencement de boîtier de blindage de longueur variable suivant la revendication 1,
**caractérisé en ce que**
le revêtement est un revêtement métallique.

3. Agencement de boîtier de blindage de longueur variable suivant la revendication 1 ou 2,
**caractérisé en ce que**
le revêtement est usiné après le dépôt sur le corps support.

4. Agencement de boîtier de blindage de longueur variable suivant l'une des revendications 1 à 3,
**caractérisé en ce que**
le revêtement fait partie d'une étanchéité à glissement étanche au fluide entre le premier et le deuxième boîtiers (1a, 1b, 2a, 2b) de blindage.

5. Agencement de boîtier de blindage de longueur variable suivant l'une des revendications 1 à 4,
**caractérisé en ce que**
un élément (8) de contact, notamment un contact glissant, met les deux boîtiers de blindage en contact l'un avec l'autre.
